# EUROPEAN PATENT APPLICATION

(11) **EP 1 366 980 A1**
(43) Date of publication of application: **03.12.2003**
(21) Application number: 02253753.4
(22) Date of filing: 29.05.2002
(51) Int. Cl.: B62M 25/04

(54) **Manual shift mechanism of a bicycle**

(71) Applicant: Liu, Jen-Chih, Kaohsiung City (TW)
(72) Inventor: Liu, Jen-Chih, Kaohsiung City (TW)
(74) Representative: Abbie, Andrew Kenneth

(57) **Abstract**

Manual shift mechanism of a bicycle, which is mounted on a handle of the bicycle. The shift mechanism includes a front cord-guiding casing and a rear rotary sleeve mated with the front casing. A shift member is disposed between the front casing and the rear rotary sleeve and driven by the rear rotary sleeve. The shift member is displaceable to selectively directly mesh with a ring gear for pulling and releasing a transmission pull cord or mesh with a planet gear which is drivingly engaged with the ring gear for pulling and releasing the transmission pull cord. When the ring gear is engaged with and driven by the shift member, the gears are one by one shifted and when the ring gear is engaged with and driven by the planet gear of the planet gear frame, the gear is several times shifted by way of jumping.

## Description

### BACKGROUND OF THE INVENTION

The present invention is related to a manual shift mechanism of a bicycle, in which the gears can be selectively one by one shifted or several times by several times shifted by way of jumping.

A conventional bicycle transmission mechanism includes a shift lever which pulls and releases a pull cord for drivingly operating the transmission mechanism. In operation, a user must pull and release the shift lever with fingers. During running, this often makes the user lose his/her concentration and delay in racing. Accordingly, the safety cannot be ensured and the operation is inconvenient.

An improved shift mechanism has been developed, which is directly disposed on the handle of the bicycle. In shifting, a user can directly hold and turn the handle to pull and release the pull cord. Such shift mechanism is disclosed in U.S. Patent Nos. 4900291, 4938733, 5315891 and 5197927.

In all the above conventional manual shift mechanisms of bicycles, the gears can be only sequentially one by one shifted. With the same rotational angle, it is impossible for all these shift mechanisms to shift the gears several times by several times.

### SUMMARY OF THE INVENTION

It is therefore a primary object of the present invention to provide a manual shift mechanism of a bicycle, in which the gears can be selectively one by one shifted or several times by several times shifted by way of jumping. Therefore, the shifting operation can be more conveniently and faster performed.

The present invention can be best understood through the following description and accompanying drawings wherein:

### BRIEF DESCRIPTION OF THE DRAWINGS

Fig. 1 is a perspective exploded view of the present invention;
Fig. 2 is a plane view of the front cord-guiding casing of the present invention;
Fig. 3 is a top view according to Fig. 2;
Fig. 4 is a right view according to Fig. 2;
Fig. 5 is a plane view of the gear number indicator of the present invention;
Fig. 6 is a top view according to Fig. 5;
Fig. 7 is a right view according to Fig. 5;
Fig. 8 is a plane view of the fixing hoop of the present invention;
Fig. 9 is a top view according to Fig. 8;
Fig. 10 is a right view according to Fig. 8;
Fig. 11 is a plane view of the locating member of the present invention;
Fig. 12 is a top view according to Fig. 11;
Fig. 13 is a right view according to Fig. 11;
Fig. 14 is a rear view according to Fig. 11;
Fig. 15 is a plane view of the serially fitting member of the present invention;
Fig. 16 is a top view according to Fig. 15;
Fig. 17 is a right view according to Fig. 15;
Fig. 18 is a plane view of the ring gear of the present invention;
Fig. 19 is a top view according to Fig. 18;
Fig. 20 is a right view according to Fig. 18;
Fig. 21 is a rear view according to Fig. 18;
Fig. 22 is a plane view of the planet gear frame of the present invention;
Fig. 23 is a top view according to Fig. 22;
Fig. 24 is a right view according to Fig. 22;
Fig. 25 is a plane view of the sun gear of the present invention;
Fig. 26 is a top view according to Fig. 25;
Fig. 27 is a right view according to Fig. 25;
Fig. 28 is a plane view of the shift member of the present invention;
Fig. 29 is a top view according to Fig. 28;
Fig. 30 is a right view according to Fig. 28;
Fig. 31 is a plane view of the rear rotary sleeve of the present invention;
Fig. 32 is a top view according to Fig. 31;
Fig. 33 is a right view according to Fig. 31;
Fig. 34 is a plane view of the fast ring of the present invention;
Fig. 35 is a top view according to Fig. 34;
Fig. 36 is a right view according to Fig. 34; and
Fig. 37 is a rear view according to Fig. 34.

### DETAILED DESCRIPTION OF THE PREFERRED EMBODIMENT

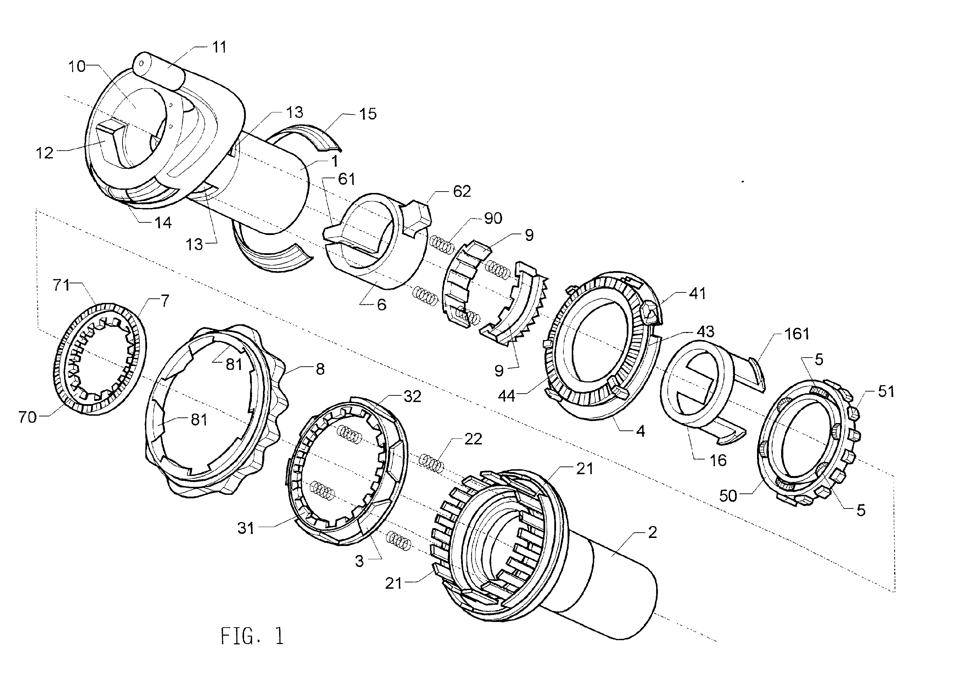

Please refer to Fig. 1. The manual shift mechanism of a bicycle of the present invention includes a front cord-guiding casing 1 and a rear rotary sleeve 2. A shift member 3 is disposed between the front casing 1 and the rear rotary sleeve 2 and driven by the rear rotary sleeve 2. By means of selectively shifting the shift member 3, a ring gear 4 can be directly driven to pull and release a pull cord stage by stage. Alternatively, via a planet gear 5 meshing with the ring gear 4, the ring gear 4 can be driven to pull and release the pull cord several times stage by several times stage. Accordingly, the gear can be shifted one by one or jumped several times by several times.

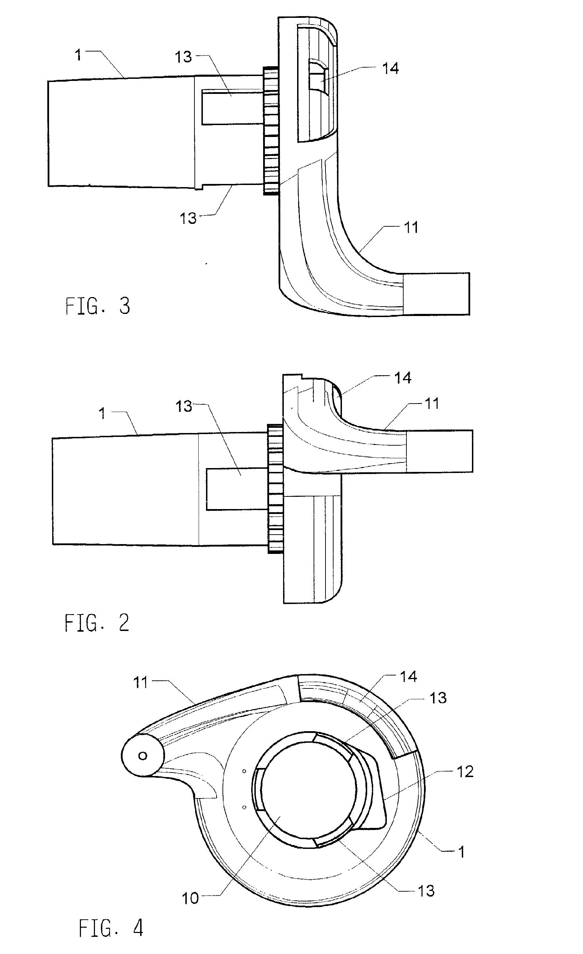

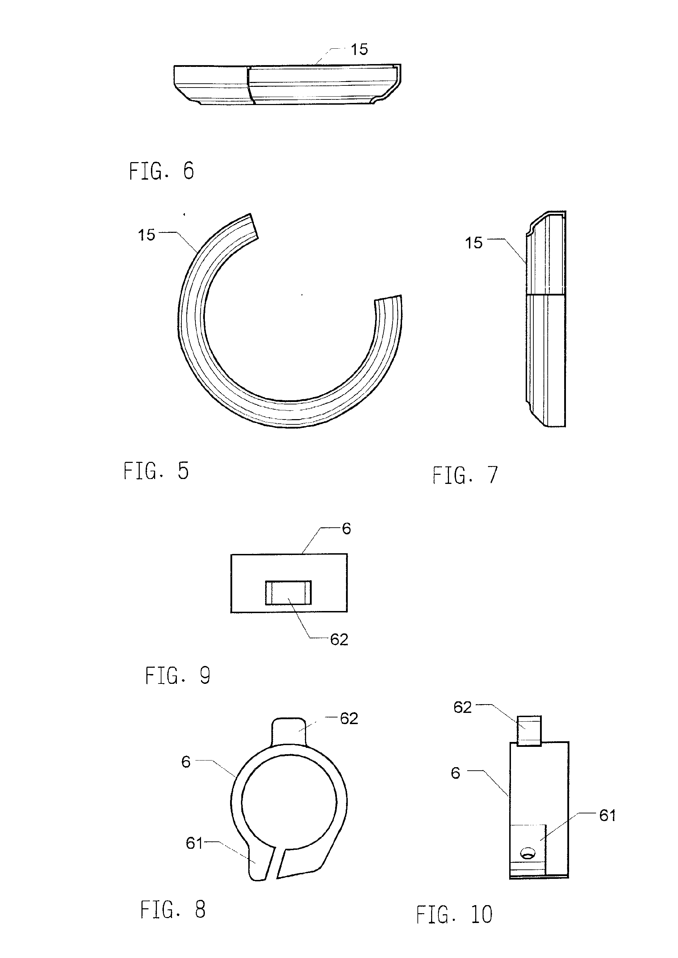

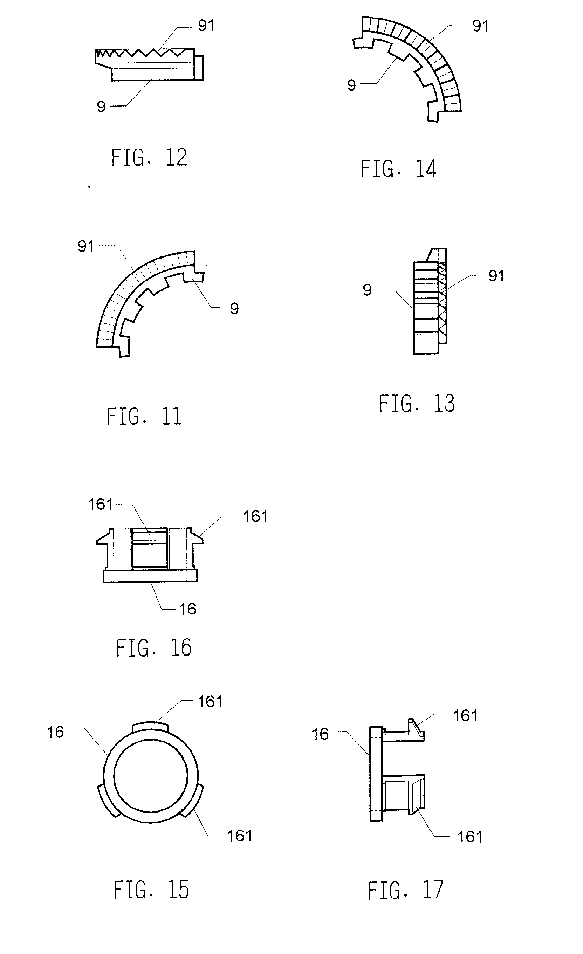

Please refer to Figs. 1 and 2 to 4. The front casing 1 is formed with a cord-guiding arm 11 through which the transmission pull cord is passed to connect with a pull cord locating seat 41 of the ring gear 4. The front casing 1 is formed with a central passage 10 through which a handle is passed. In addition, the entrance of the passage 10 is provided with a locating cave 12 for locating a fixing hoop 6 ( as shown in Figs. 8 to 10 ). The front casing 1 is further formed with a window 14. An in-built gear number indicator 15 ( as shown in Figs. 5 to 7 ) is drivingly connected with the ring gear 4. The gear number indicator 15 serves to indicate the shift position of the ring gear 4 through the window 14. A rear collar section of the front casing 1 is formed with at least one locating bore 13. A hooking claw 161 of a fitting member 16 ( as shown in Figs. 15 to 17 ) protrudes through the locating bore 13 out of the collar section for serially locating relevant components.

Referring to Figs. 1 and 8 to 10, the fixing hoop 6 has an outward projecting locating block 61 formed with a split. A screw can be screwed through the locating block 61 to fix the shift mechanism on the handle. A projecting block 62 of the fixing hoop 6 is inlaid in the locating cave of the front casing 1, whereby the front casing 1 is located without rotation.

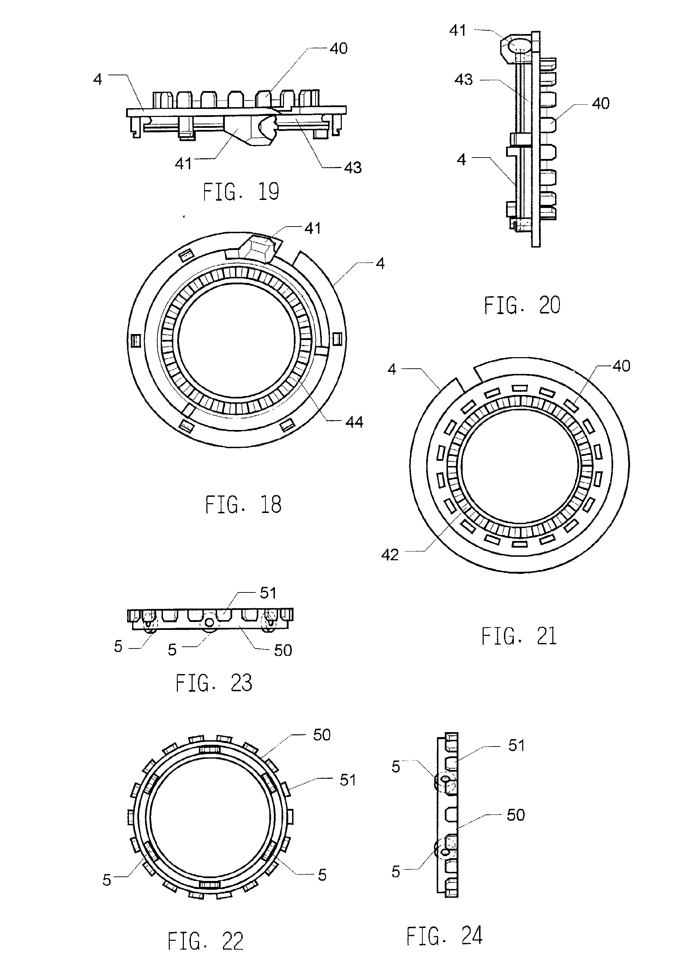

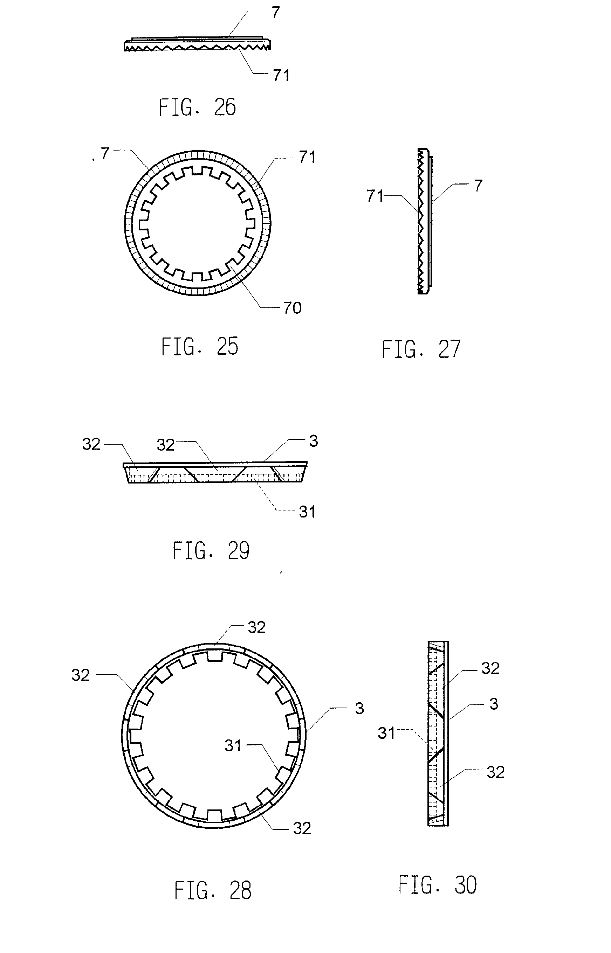

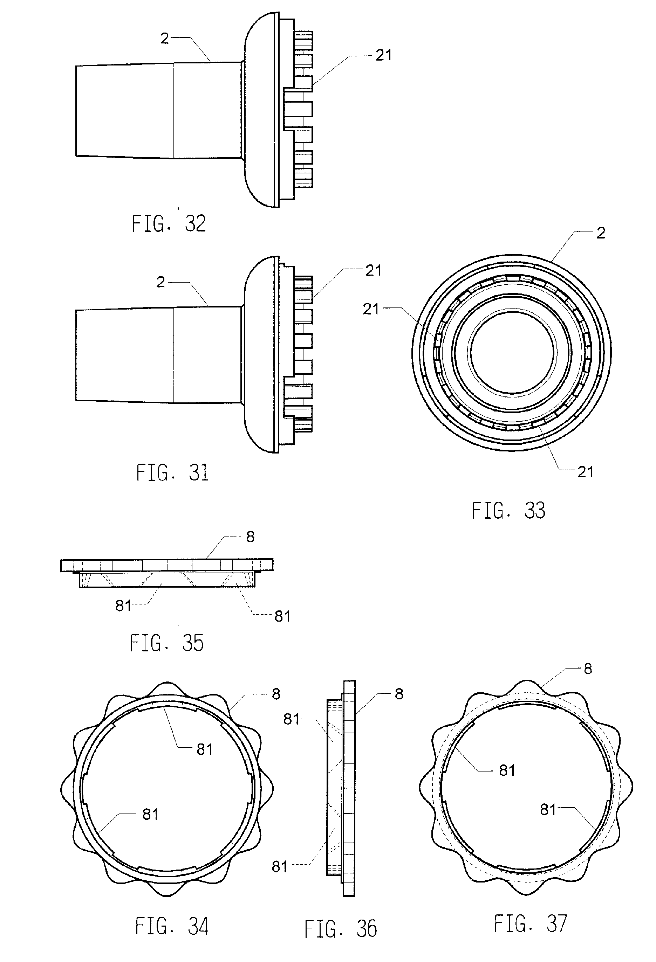

Referring to Fig. 1, the rear rotary sleeve 2 ( as shown in Figs. 31 to 33 ) is mated with the front casing 1. The front end of the rotary sleeve 2 is provided with driving plates 21 for driving the shift member 3 to synchronously rotate. As shown in Figs. 28 to 30, the inner circumference of the shift member 3 is provided with inward projecting teeth 31. The driving plates 21 of the rotary sleeve 2 extend into the spaces between the teeth. The horizontal extending length of the driving plates 21 is larger than the thickness of the teeth 31, whereby the shift member 3 can be stably driven by the rotary sleeve 2. Springs 22 are positioned between the shift member 3 and the rotary sleeve 2 for constantly forward pushing and locating the shift member 3. In normal time, the teeth 31 of the shift member 3 are engaged with the engaging sections 40 of the ring gear 4 ( as shown in Figs. 18 to 21 ) to directly drive the ring gear 4 for pulling and releasing the transmission pull cord and shifting the gears one by one. That is, when the rotary sleeve 2 is turned by a set unit angle ( between gears ), the ring gear 4 is synchronously rotated by one unit angle for shifting one gear.

In addition, the outer circumference of the shift member 3 is provided with guiding blocks 32 meshing with guiding blocks 81 formed on inner circumference of the fast ring 8. When the fast ring 8 is rotated, the shift member 3 is driven to horizontally displace by a set distance to make the teeth 31 of the shift member 3 disengaged from the engaging sections 40 of the ring gear 4 and drivingly engaged with the engaging teeth 51 of the gear frame 50 of the planet gear 5. Accordingly, when the rotary sleeve 2 is rotated by a set unit angle ( between gears ), the teeth 31 of the shift member 3 drive the engaging teeth 51 of the gear frame 50 and then the planet gear 5 drives the annular tooth face 42 of the ring gear 4. Accordingly, the ring gear 4 is rotated by a set angle which is several times the rotating angle of the rotary sleeve 2. Therefore, the pull cord is pulled and released for shifting several gears at one time.

Referring to Figs. 1 and 22 to 24, the gear frame 50 is provided with the planet gear 5 for drivingly engaging with the ring gear 4. The outer circumference of the gear frame 50 is provided with engaging teeth 51 with which the shift member 3 is selectively engaged. As shown in Figs. 25 to 27, the inner circumference of the sun gear 7 is provided with locating teeth 70. One face of the sun gear 7 is formed with an annular tooth face 71 meshing with the planet gear 5 of the gear frame 50.

As shown in Figs. 18 to 21, one face of the ring gear 4 is formed with engaging sections 40 for engaging with the engaging teeth 31 of the shift member 3. The same face is provided with an annular tooth face 42 for engaging with the planet gear 5. The other face is provided with the pull cord locating seat 41 for connecting with an end of the pull cord and is provided with a winding groove 43 in which the pull cord is wound. In addition, the same face is provided with transmission locating tooth face 44 for meshing with a tooth face 91 of the locating member 9 ( as shown in Figs. 11 to 14 ). Springs 90 are positioned between the locating member 9 and the inner wall of the front casing 1. The locating member 9 provides an adjustable shift locating effect for the ring gear 4.

Please refer to Fig. 1. In normal state, the rotary sleeve 2 is engaged with the shift member 3 which is engaged with the ring gear 4. When the rotary sleeve 2 is turned by a set unit angle ( between gears ), the ring gear 4 is rotated by the set angle to shift to the next gear. Accordingly, the gears are shifted one by one, that is, each time the ring gear 4 is rotated by one unit angle, one gear is shifted.

When it is desired to shift the gears by way of jumping ( for example, the ratio of the rotational speed of the planet gear is set 1:2 ), via the fast ring 8, the shift member 3 is displaced and disengaged from the ring gear 4. Instead, the shift member 3 is engaged with the planet gear frame 50 and the planet gear 5 is engaged with the ring gear 4. When the rotary sleeve 2 is rotated by a set unit angle ( between gears ), the ring gear 4 is rotated by a set angle which is several times the unit angle of the rotary sleeve 2. Therefore, each time the rotary sleeve 2 is rotated by one unit angle, the gear is several times shifted at one time by way of jumping.

Accordingly, in multiple gear transmission, the gears can be one by one shifted or several times by several times shifted by way of jumping. Therefore, the operation of the shift can be more conveniently and quickly performed in accordance with actual requirements.

The above embodiment is only used to illustrate the present invention, not intended to limit the scope thereof. Many modifications of the above embodiment can be made without departing from the spirit of the present invention.

## Claims

1. Manual shift mechanism of a bicycle, comprising:
a front cord-guiding casing;
a rear rotary sleeve mated with the front casing;
a shift member disposed between the front casing and the rear rotary sleeve and driven by the rear rotary sleeve, the shift member being displaceable to selectively mesh with a ring gear or mesh with a planet gear of a planet gear frame which is drivingly engaged with the ring gear; and
a ring gear connected with a transmission pull cord, the ring gear being engaged with and driven by the shift member or the planet gear of the planet gear frame, whereby when the ring gear is engaged with and driven by the shift member, the gears are one by one shifted and when the ring gear is engaged with and driven by the planet gear of the planet gear frame, the gears are shifted by set several times.

2. Manual shift mechanism of a bicycle as claimed in claim 1, wherein the front casing is formed with a cord-guiding arm through which the transmission pull cord is passed to connect with a pull cord locating seat of the ring gear, the front casing being formed with a central passage through which a handle is passed, an entrance of the passage being provided with a locating cave for locating a fixing hoop, the front casing being further formed with a window, an in-built gear number indicator being drivingly connected with the ring gear, the gear number indicator serving to indicate the shift position of the ring gear through the window, a rear collar section of the front casing being formed with at least one locating bore, a hooking claw of a fitting member protruding through the locating bore out of the collar section for serially locating other components.

3. Manual shift mechanism of a bicycle as claimed in claim 1, wherein an outer circumference of the fixing hoop is provided with an outward projecting locating block and a projecting block, the locating block being formed with a split.

4. Manual shift mechanism of a bicycle as claimed in claim 1, wherein a front end of the rotary sleeve is provided with driving plates for driving the shift member, an inner circumference of the shift member being provided with inward projecting engaging teeth, a horizontal extending length of the driving plates being larger than the thickness of the engaging teeth.

5. Manual shift mechanism of a bicycle as claimed in claim 1, wherein springs are positioned between the shift member and the rotary sleeve for constantly forward pushing and locating the shift member, whereby in normal time, the engaging teeth of the shift member is engaged with engaging sections of the ring gear to directly drive the ring gear for pulling and releasing the transmission pull cord and shifting the gears one by one, that is, when the rotary sleeve is turned by a set unit angle ( between gears ), the ring gear is synchronously rotated by one unit angle for shifting one gear.

6. Manual shift mechanism of a bicycle as claimed in claim 1, wherein an outer circumference of the shift member is provided with guiding blocks meshing with guiding blocks formed on inner circumference of a fast ring, whereby when the fast ring is rotated, the shift member is driven to horizontally displace by a set distance to make the engaging teeth of the shift member disengaged from the engaging sections of the ring gear and drivingly engaged with the engaging teeth of the gear frame of the planet gear and when the rotary sleeve is rotated by a set unit angle ( between gears ), the engaging teeth of the shift member drive the engaging teeth of the gear frame and then the planet gear drives the annular tooth face of the ring gear, whereby the ring gear is rotated by a set angle which is several times the rotating angle of the rotary sleeve and the pull cord is pulled and released for shifting several gears at one time.

7. Manual shift mechanism of a bicycle as claimed in claim 1, wherein planet gears are arranged on the planet gear frame for drivingly engaging with the ring gear, an outer circumference of the gear frame being provided with engaging teeth with which the shift member is selectively engaged.

8. Manual shift mechanism of a bicycle as claimed in claim 1, wherein an inner circumference of a sun gear engaged with the gear frame is provided with locating teeth, one face of the sun gear being formed with an annular tooth face meshing with the planet gear of the gear frame.

9. Manual shift mechanism of a bicycle as claimed in claim 1, wherein one face of the ring gear is formed with engaging sections for engaging with the engaging teeth of the shift member, the same face being provided with an annular tooth face for engaging with the planet gear, the other face being provided with the pull cord locating seat for connecting with an end of the pull cord and being provided with a winding groove in which the pull cord is wound, the same face being further provided with transmission locating tooth face for meshing with a tooth face of a resilient locating member which provides a shift locating effect for the ring gear.

10. Manual shift mechanism of a bicycle as claimed in claim 1, wherein in normal state, the rotary sleeve is engaged with the shift member which is engaged with the ring gear and when the rotary sleeve is turned by a set unit angle ( between gears ), the ring gear is rotated by the set angle to shift to the next gear, whereby the gears are shifted one by one, that is, each time the ring gear is rotated by one unit angle, one gear is shifted.

11. Manual shift mechanism of a bicycle as claimed in claim 1, wherein when it is desired to shift the gears by way of jumping, via the fast ring, the shift member is displaced and disengaged from the ring gear and instead, the shift member is engaged with the planet gear frame and the planet gear is engaged with the ring gear, whereby when the rotary sleeve is rotated by a set unit angle ( between gears ), the ring gear is rotated by a set angle which is several times the unit angle of the rotary sleeve, so that each time the rotary sleeve is rotated by one unit angle, the gear is fast several times shifted by way of jumping.
